# EUROPÄISCHE PATENTSCHRIFT

(11) **EP 0 993 556 B1**
(45) Veröffentlichungstag und Bekanntmachung des Hinweises auf die Patenterteilung: **04.08.2004**
(21) Anmeldenummer: 98933623.5
(22) Anmeldetag: 17.06.1998
(51) Int. Cl.: F16B 13/06

(54) **SPREIZDÜBEL**
EXPANSION ANCHOR
CHEVILLE A EXPANSION

(30) Priorität: 09.07.1997 DE 19729235; 08.11.1997 DE 19751065; 06.04.1998 DE 19815334
(43) Veröffentlichungstag der Anmeldung: 19.04.2000
(73) Patentinhaber: fischerwerke Artur Fischer GmbH & Co. KG, 72178 Waldachtal (DE)
(72) Erfinder: FRISCHMANN, Albert, D-79341 Kenzingen (DE); STEURER, Paul, D-79331 Teningen (DE); SCHNABL, Rudolf, D-79336 Herbolzheim (DE); RIEGER, Johannes, D-79336 Herbolzheim (DE); STRIEBICH, Jürgen, D-72160 Horb (DE); HENGESBACH, Wolfgang, D-72280 Dornstetten (DE)
(86) Internationale Anmeldenummer: PCT/EP1998/003646
(87) Internationale Veröffentlichungsnummer: WO 1999/002869

(56) Entgegenhaltungen:
- EP-A- 0 099 028
- EP-A- 0 367 672
- AU-A- 6 721 281
- DE-A- 3 601 597
- FR-A- 2 268 974
- GB-A- 1 268 622
- GB-A- 1 418 881

## Beschreibung

Die Erfindung betrifft einen Spreizdübel mit einer Metallspreizhülse und einem einen Spreizkonus aufweisenden Spreizkörper gemäß der Gattung des Anspruchs 1.

Dübel der obengenannten Art werden in der Weise verankert, daß der Spreizkörper in die Spreizhülse hineingezogen wird, wobei sich die Spreizhülse entweder unmittelbar oder über eine Distanzhülse am Gegenlager der Schraube abstützt. Der Spreizkörper kann über eine Gewindeverbindung mit der Schraube verbunden sein, oder er kann an einem Gewindebolzen angestaucht sein, der dann als Gegenlager eine Mutter aufweist.

Der Einsatz solcher Dübel in der Zugzone eines Ankergrundes erfordert ein hohes Nachspreizvermögen, um bei der Erweiterung des Bohrlochs durch Rißbildung eine Abminderung des Haltewertes zu vermeiden. Ein derartiger Spreizdübel ist in der EP-B-0 163 152 dargestellt.

Um ein hohes Nachspreizvermögen zu sichern, wird hier vorgeschlagen, an den größten Durchmesser des kegelförmigen Spreizkonuses einen konkav ge wölbten Abschnitt anzubringen, wobei die am Auslauf des gewölbten Abschnittes angelegte Tangente zur Mittelachse des Dübels einen Winkel bildet, der etwa dem zweifachen des Winkels des kegelförmigen Spreizkonuses entspricht.

Der bevorzugte Winkel des kegelförmigen Spreizkonuses beträgt 6°.

Als nachteilig hat sich bei dem bekannten Spreizdübel gezeigt, daß ein großes Drehmoment benötigt wird, um die relativ steife Spreizhülse über den Spreizkonus umzubiegen. Außerdem müssen die beiden ringförmigen Auflageflächen über das Drehmoment so weit in den Beton eingedrückt werden, daß auch nach der Rißöffnung eine wirksame Hinterschneidung beibehalten wird. Ferner ist die Herstellung des Spreizkörpers nur spanabhebend und somit mit hohem Kostenaufwand möglich.

In der Druckschrift EP-A-0 099 028 wird weiterhin ein derartiger Spreizdübel dargestellt, dessen Spreizhülse aus einer Innen- und einer Außenhülse besteht, welche ineinander angeordnet sind.

Dadurch, daß die Spreizhülse aus einer Außen- und Innenhülse besteht, die ineinander in der Weise angeordnet sind, daß die Spreizschenkel der Innenhülse über das vordere Ende der Außenhülse herausragen und leicht nach außen aufgebogen sind, wird im Falle einer Rißbildung ein sicheres Nachspreizen erreicht. Nach dem Einführen des Spreizdübels ins Bohrloch erfolgt ein zweistufiger Spreizvorgang. Beim Verspannen des Dübels dringt zuerst die Verzahnung der Innenhülse in den Untergrund ein und bildet eine Mulde, die notwendig ist, um die Zugzonentauglichkeit zu gewährleisten. Nach einem gewissen Spreizweg kommt die Außenhülse an der Bohrlochwandung zur Anlage. In dem Moment haben beide Hülsen eine große Anlagefläche im Beton, die dazu führt, daß eine eventuelle Kerbwirkung reduziert wird.

Allerdings ist die Herstellung eines derartigen Spreizdübels aufgrund der Mehrteiligkeit sehr teuer.

Der Erfindung liegt daher die Aufgabe zu Grunde, einen Dübel zu schaffen, der wirtschaftlich herstellbar ist und ein hohes Nachspreizverhalten aufweist.

Diese Aufgabe wird erfindungsgemäß durch die Merkmale des Anspruchs 1 gelöst. Die Spreizhülse ist einteilig und mit einer um den Umfang verlaufenden Umfaltung an ihrem dem Spreizkonus abgewandten Ende versehen.

Dadurch, daß die Spreizschenkel der Innenhülse an der Stirnseite mit Ausnehmungen versehen sind, wird die Anpreßfläche der Spreizhülse auf den Beton reduziert, so daß der Dübel mit geringerem Drehmoment vorgespannt werden kann.

Eine weitere Ausbildung der Spreizhülse kann dadurch erreicht werden, daß die Stanzplatine mit radialen und axialen Einschnitten versehen ist, so daß beim Umfalten der Stanzplatine eine vordere und eine hintere Lasche sowie ein Wulst entsteht. Die hintere Lasche dient als Anschlag gegen den Bund an der Distanzhülse oder an einem Bolzenschaft und verhindert, daß beim Einschlagen des Ankers ins Bohrloch die Spreizhülse über den Bolzen abgestreift wird. Die nach vorne gebogene Spitze dringt in die Bohrlochwandung hinein und sichert, daß beim Aufbringen des Drehmoments die Spreizhülse eine unverrückbare Position beibehält. Dadurch wird eine einfache Drehsperre erreicht. Der Wulst, der an der Knickstelle entsteht, bildet ein Hohlraum, der zusätzlich das Verdrehen der Spreizhülse sichert.

In der Zeichnung sind Beispiele, die das Verständnis der Erfindung erleichtern, sowie ein Ausführungsbeispiel dargestellt.

Es zeigen:
- Figur 1: einen Spreizdübel im komplettierten Zustand in Sicht
- Figur 2: den in Figur 1 dargestellten Spreizdübel im Schnitt
- Figur 3: die Spreizhülse in Sicht
- Figur 3a: die Außenhülse
- Figur 3b: die Innenhülse
- Figur 4: den selben Spreizdübel im Bohrloch im Schnitt
- Figur 4a: vergrößerte Darstellung des Ausschnitts zur Figur 4
- Figur 5: den selben Spreizdübel im eingebauten Zustand in Sicht
- Figur 5a: eine alternative Spreizhülse mit Umfaltung nach innen

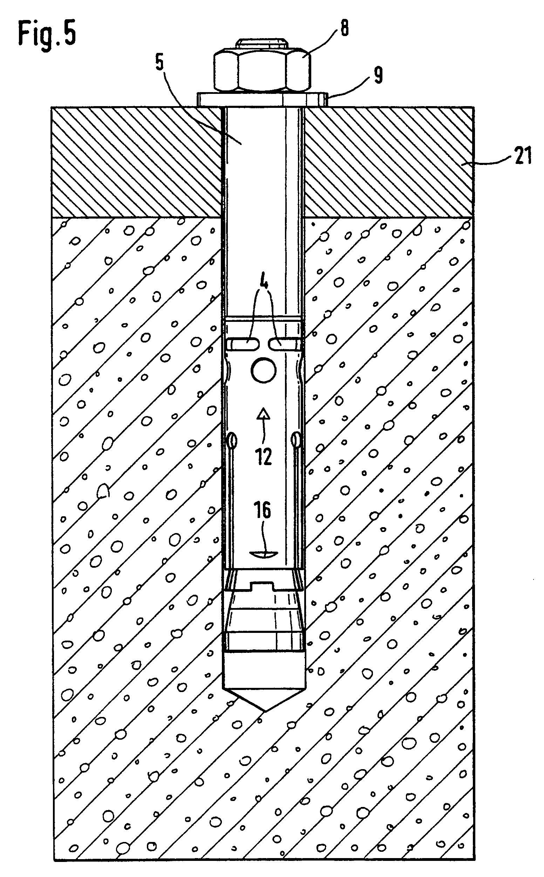

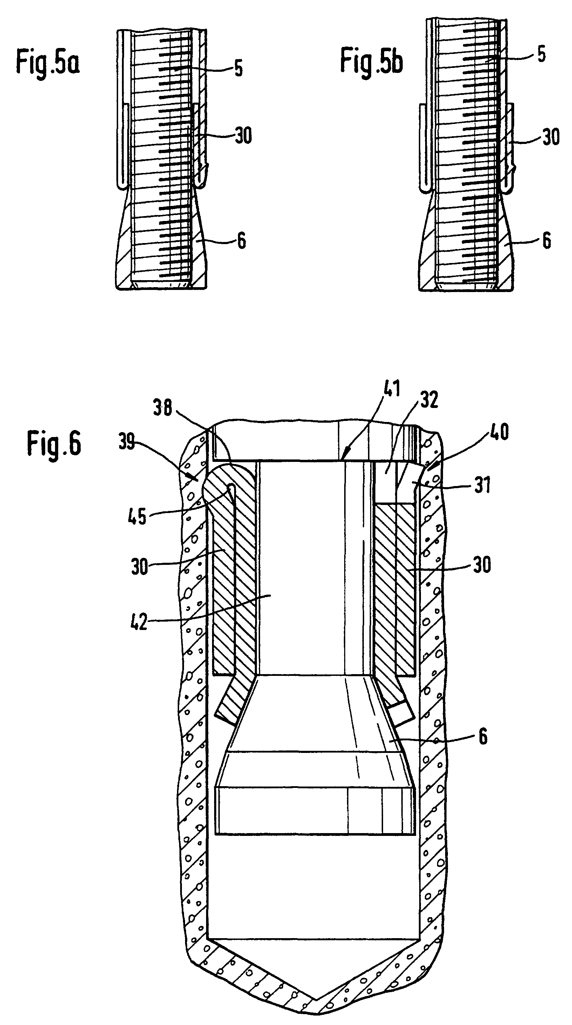

- Figur 5 b: eine weitere alternative Spreizhülse mit Umfaltung nach außen
- Figur 6: einen erfindungsgemäßen Spreizdübel mit der auf den Bolzenschaft aufgesetzte Spreizhülse teilweise im Schnitt

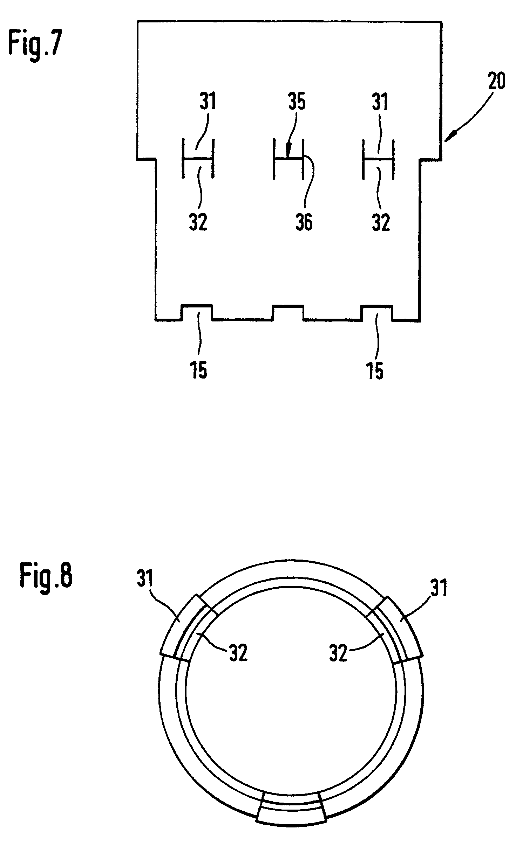

- Figur 7: die Stanzplatine mit den angebrachten Einschnitten
- Figur 8: die gebildeten vorderen und hinteren Laschen

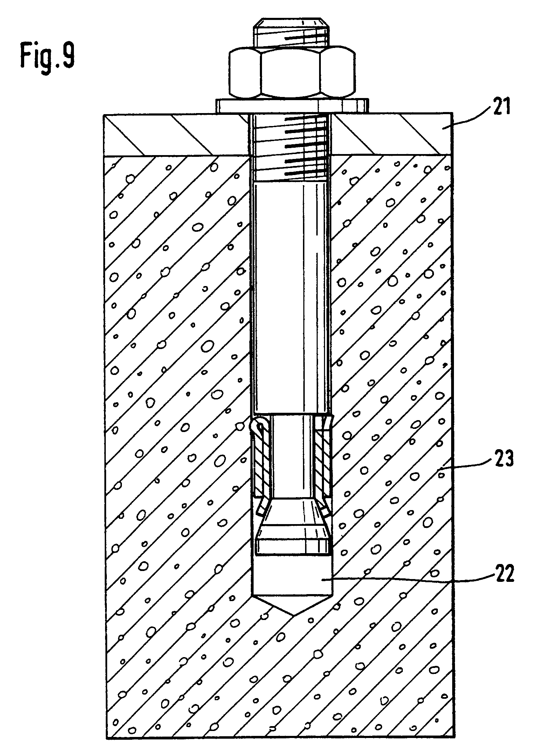

- Figur 9: die mit Hilfe der erfindungsgemäßen Spreizhülse durchgeführte Befestigung

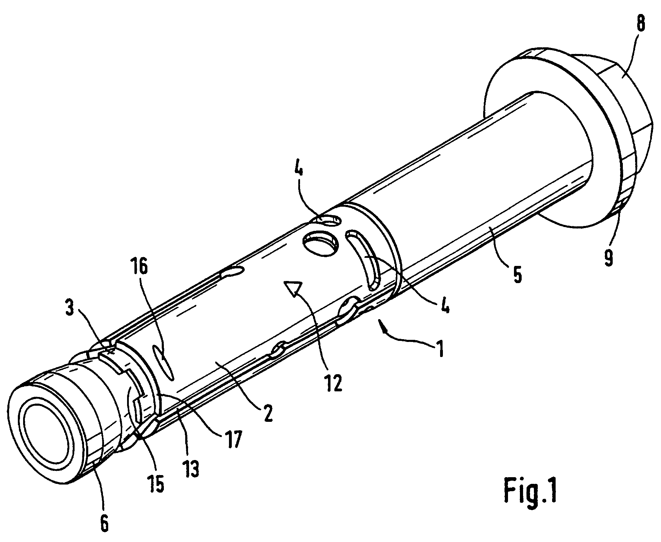

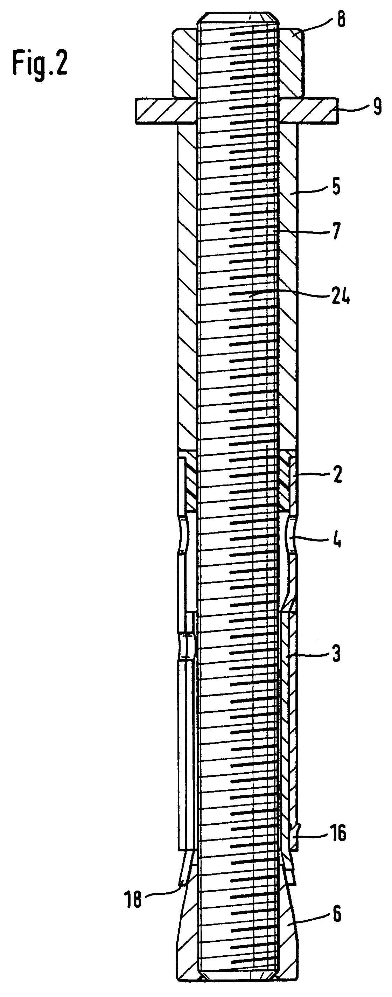

Der in Figur 1 und 2 dargestellte Spreizdübel 1 besteht aus einem einen Gewindeabschnitt 7 aufweisenden Bolzen 24 der mit einem Konus 6 versehen ist. Auf den Bolzen wird eine Distanzhülse 5 und eine Spreizhülse angebracht. An der zum Konus 6 gegenüberliegenden Seite ist ein Gegenlager, beispielsweise eine Mutter 8 mit Unterlegscheibe 9, zum Aufbringen eines Drehmomentes vorgesehen.

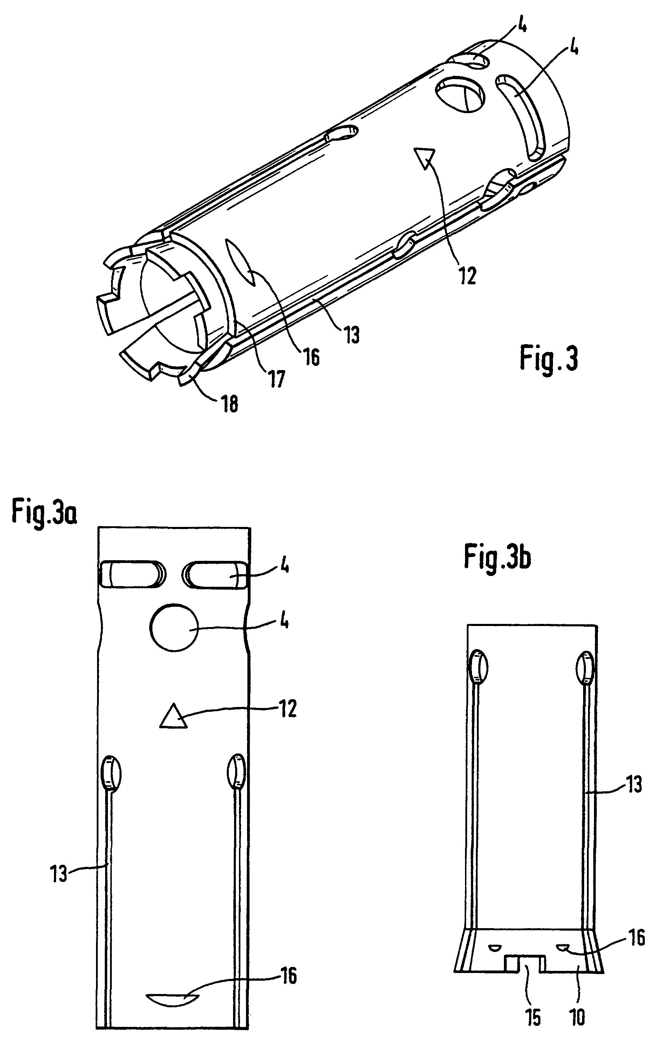

Die Spreizhülse ist mit Schlitzen 13 versehen und besteht aus einer Außenhülse 2 und einer Innenhülse 3 die ineinander angeordnet sind, wie die Figur 3 darstellt. Die Spreizschenkel 10 der Innenhülse 3 sind, wie die Figur 3b darstellt, mit Ausnehmungen 15 versehen. Auf den Spreizschenkel können auch Nasen 16 angebracht werden, die jedoch nicht zwingend erforderlich sind.
Die Spreizschenkel 10 der Innenhülse 3 sind nach außen aufgebogen und ragen über das vordere Ende der Außenhülse 2 heraus.
Die Außenhülse ist im hinteren Bereich mit Durchbrüchen 4 und Vorsprüngen 12 versehen.

Die Vorsprünge 12 sind so geformt, daß kleine Stützelemente entstehen, an denen sich die Innenhülse 3 abstützen kann. Über dem vorderen Ende 17 der Außenhülse 2 befindet sich eine Nase 16.

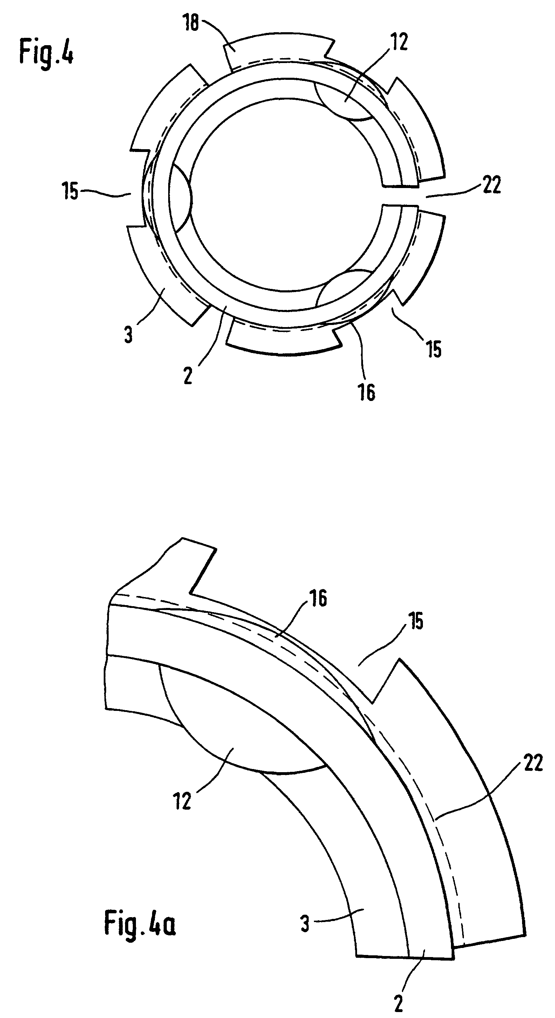

Die Lage beider Hülsen 2 und 3 im gespreizten Zustand nach dem Einbringen im Bohrloch 22 ist deutlich in den Figuren 4 und 4a dargestellt. Eine Befestigung eines Gegenstands 21 ist in der Figur 5 dargestellt.

Die Spreizhülse kann mit einer Umfaltung 30 versehen werden. Dadurch, daß die Spreizhülse mit einer Umfaltung 30 versehen ist, wie die Figur 5a, b darstellt, ist eine maximale Spreizkraft des Spreizdübels gesichert. Die Umfaltung kann nach außen, wie die Figur 5b, und nach innen, wie die Figur 5a darstellt, angebracht werden.

Figur 6 zeigt ein Ausführungsbeispiel der Erfindung. Da sich die Unterschiede zu den vorherigen Beispielen im Wesentlichen auf die Spreizhülse beschränken, zeigt die Darstellung einen entsprechenden Ausschnitt. Die Spreizhülse ist einteilig und mit einer um den Umfang verlaufenden Umfaltung (30) an ihrem dem Spreizkonus abgewandten Ende versehen.

Durch die radialen und axialen Einschnitte der Stanzplatine 20, wie die Figuren 7, 8 darstellen, entsteht beim Umbiegen der Stanzplatine eine vordere 31 und eine hintere Lasche 32. Ferner entsteht ein Wulst 39 mit einer abgerundeten Kante 38, wie die Figur 6 zeigt.

Die hintere Lasche 32 dient als Anschlag 41 gegen den Bund 40 am Bolzenschaft 42 und verhindert, daß beim Anbringen des Ankers ins Bohrloch die Spreizhülse über den Bolzen abgestreift wird. Die nach vorne gebogene Spitze 40 dringt in die Bohrlochwandung hinein und bildet eine sichere Drehsperrung für die Spreizhülse. Beim Entstehen des Wulstes 39 bildet sich an der Knickstelle ein Hohlraum, der eine zusätzliche Sicherung vor dem Verdrehen der Spreizhülse bietet.

## Patentansprüche

1. Spreizdübel, der aus einer Spreizhülse aus Metall und einem einen Spreizkonus aufweisenden Spreizköper besteht, wobei die Spreizhülse aus einer Außenhülse (2) und einer Innenhülse (3) , die ineinander angeordnet sind, besteht, und wobei die Spreizschenkel (10) der Innenhülse (3) nach außen aufgebogen sind und über das vordere Ende der Außenhülse (2) herausragen, **dadurch gekennzeichnet, dass** die Spreizhülse einteilig ist und mit einer um den Umfang verlaufenden Umfaltung (30) an ihrem dem Spreizkonus abgewandten Ende versehen ist.

2. Spreizdübel nach Anspruch 1, **dadurch gekennzeichnet, dass** die Außenhülse (2) und/oder die Spreizschenkel (10) der Innenhülse (3) mit Nasen (16) versehen sind.

3. Spreizdübel nach Anspruch 1, **dadurch gekennzeichnet, dass** die Spreizschenkel (10) der Innenhülse (3) mit Ausnehmungen (15) versehen sind.

## Claims

1. Expansible fixing plug comprising an expansible metal sleeve and an expander body having an expander cone, the expansible sleeve consisting of an outer sleeve (2) and an inner sleeve (3), which are arranged one inside the other, and the expanding arms (10) of the inner sleeve (3) being bent up outwardly and projecting out beyond the forward end of the outer sleeve (2), **characterized in that** the expansible sleeve is made in one piece and, at its end remote from the expander cone, is provided with a folded-over portion (30) extending around the periphery.

2. Expansible fixing plug according to claim 1, **characterized in that** the outer sleeve (2) and/or the expanding arms (10) of the inner sleeve (3) are provided with lugs (16).

3. Expansible fixing plug according to claim 1, **characterized in that** the expanding arms (10) of the inner sleeve (3) are provided with cut-outs (15).

## Revendications

1. Cheville à expansion, qui est formée par une douille expansible en métal et un corps à expansion muni d'un cône expansible, la douille expansible étant formée par une douille extérieure (2) et une douille intérieure (3), qui sont emboîtées l'une dans l'autre, les flancs expansibles (10) de la douille intérieure (3) étant cambrés vers l'extérieur et s'avançant au-delà de l'extrémité avant de la douille extérieure (2), **caractérisée en ce que** la douille expansible est réalisée en une seule pièce et comporte un pli couché (30) qui s'étend sur le pourtour au niveau de son extrémité opposée au cône expansible.

2. Cheville à expansion selon la revendication 1, **caractérisée en ce que** la douille extérieure (2) et/ou les flancs expansibles (10) de la douille intérieure (3) sont munis d'ergots (16).

3. Cheville à expansion selon la revendication 1, **caractérisée en ce que** les flancs expansibles (10) de la douille intérieure (3) comportent des évidements (15).
